Europäisches Patentamt

European Patent Office

Office européen des brevets

(11) Numéro de publication: **0 267 101**
**A1**

## (12) DEMANDE DE BREVET EUROPEEN

(21) Numéro de dépôt: 87402403.7

(22) Date de dépôt: 26.10.87

(51) Int. Cl.⁴: **B 60 H 1/00**

(30) Priorité: **03.11.86 FR 8615284**

(43) Date de publication de la demande:
**11.05.88 Bulletin 88/19**

(84) Etats contractants désignés: **DE IT**

(71) Demandeur: **VALEO**
**64 Avenue de la Grande Armée**
**F-75017 Paris (FR)**

(72) Inventeur: **Vincent, Philippe**
**9, rue des Piqueurs de Grès**
**F-28230 Epernon (FR)**

(74) Mandataire: **Lemaire, Marc**
**VALEO Département Propriété Industrielle 30, rue Blanqui**
**F-93406 Saint-Ouen (FR)**

(54) **Dispositif pour la commande coordonnée de deux organes de réglage de débit de fluides.**

(57) Le dispositif comprend au moins un système de came (203) et de levier (210) et/ou au moins un système de bielle (206) et de manivelle (220) pour commander de façon coordonnée, à partir d'un organe de commande parcourant une course univoque, deux volets (201,202) de réglage de débit d'air froid et d'air chaud de façon à obtenir un courant d'air à la température et au débit voulus.

Application à l'aération et au chauffage de l'habitacle d'un véhicule automobile.

FIG. 3

EP 0 267 101 A1

## Description

Dispositif pour la commande coordonnée de deux organes de réglage de débit de fluides.

L'invention concerne un dispositif pour la commande coordonnée de deux organes de réglage de débit respectifs pour deux courants de fluides, notamment d'un courant d'air froid et d'un courant d'air réchauffé par passage au contact d'un échangeur de chaleur, destinés à être envoyés vers une bouche d'aération et de chauffage de l'habitacle d'un véhicule automobile.

L'invention vise à permettre à l'utilisateur de faire varier le débit et la température de l'air fourni par la bouche d'aération par un mouvement unique d'un organe de commande.

Selon l'invention, le dispositif comprend un organe de commande pouvant être déplacé suivant une course univoque et des moyens mécaniques de transmission pour entraîner les organes de réglage selon le déplacement de l'organe de commande de telle façon que sur une partie de la course un premier organe de réglage reste pratiquement dans un état d'ouverture minimale pendant que le second organe de réglage passe sensiblement d'un état d'ouverture minimale à un état d'ouverture maximale ou inversement et que sur une autre partie de la course le premier organe de réglage passe sensiblement d'un état d'ouverture minimale à un état d'ouverture maximale ou inversement.

En général, pour l'un au moins des organes de réglage, l'état d'ouverture minimale correspond sensiblement à un état de fermeture, c'est-à-dire de débit nul.

Il est avantageux que pour au moins un point de la course, les deux organes de réglage soient simultanément dans leur état d'ouverture minimale, ce point pouvant être un point intermédiaire ou un point extrême de la course.

Selon un mode de réalisation de l'invention, les organes de réglage sont des volets pouvant pivoter de façon à obturer à un degré variable un passage de fluide.

Au cours de la course de l'organe de commande, l'un au moins des volets peut pivoter dans un seul sens entre une position extrême d'ouverture minimale et une position extrême d'ouverture maximale, ou entre deux positions extrêmes correspondant à un état d'ouverture minimale où maximale, en passant par au moins une position intermédiaire correspondant à l'état opposé d'ouverture maximale ou minimale. Dans les deux cas, le degré d'ouverture du volet peut varier de façon progressive pendant la totalité de son mouvement, ou le volet peut rester pratiquement dans un état d'ouverture minimale pendant une portion de son mouvement.

Alternativement, le volet peut pivoter dans un premier sens d'une position extrême d'ouverture minimale à une position extrême d'ouverture maximale, puis en sens inverse de la position d'ouverture maximale à la postion d'ouverture minimale.

Selon un mode de mise en oeuvre de l'invention, les moyens de transmission comprennent une came motrice pivotant en correspondance de la course de l'élément de commande pour entraîner l'un des organes de réglage par l'intermédiaire d'un élément pivotant, la came pouvant présenter au moins une surface de travail sensiblement circonférentielle coopérant avec l'élément pivotant pour maintenir celui-ci fixe, et au moins une surface de travail sensiblement radiale coopérant avec l'élément pivotant pour faire pivoter celui-ci.

On peut prévoir notamment que la came présente deux surfaces de travail sensiblement circonférentielles raccordées entre elles par une surface de travail sensiblement radiale, ces surfaces de travail coopérant avec l'élément pivotant pour maintenir celui-ci dans deux positions angulaires déterminées, correspondant respectivement aux états d'ouverture minimale et maximale de l'organe de réglage associé, sur deux portions extrêmes de la course, et pour le faire passer d'une position à l'autre sur la portion restante de la course.

Inversement, la came motrice peut présenter une surface de travail sensiblement circonférentielle raccordant entre elle une surface de travail sensiblement radiale et une surface de travail oblique, ces surfaces de travail coopérant avec l'élément pivotant pour maintenir celui-ci dans une position d'ouverture maximale sur une portion intermédiaire de la course et pour l'amener progressivement à une position d'ouverture minimale aux deux extrémités de la course.

Par surface de travail oblique ou inclinée, on entend une surface qui coupe les rayons de la came sous un angle non droit.

Dans un exemple de réalisation, l'élément pivotant associé à la came motrice, laquelle comporte une surface de travail circonférentielle et une surface de travail radiale, est une seconde came qui présente elle-même une surface de travail sensiblement circonférentielle et une surface de travail sensiblement radiale pour coopérer avec un second élément pivotant qui entraîne un élément de réglage associé.

Une autre réalisation de la came motrice prévoit deux surfaces de travail inclinées dans des directions opposées par rapport à son rayon, coopérant avec l'élément pivotant pour entraîner celui-ci selon un mouvement d'aller et de retour au cours de la course de l'organe de réglage.

Selon un autre mode de réalisation du dispositif selon l'in vention, les moyens de transmission comprennent un levier moteur pivotant en correspondance de la course de l'organe de commande et relié par une bielle à une manivelle entraînant l'un des éléments de réglage de façon qu'au cours de ladite course la manivelle effectue un mouvement d'aller et de retour entre deux positions angulaires correspondant respectivement aux états d'ouverture minimale et d'ouverture maximale de l'élément de réglage associé.

Selon une caractéristique avantageuse de l'invention, lorsque l'un des organes de réglage est entraîné par l'intermédiaire des surfaces de travail d'au moins une came ou par l'intermédiaire d'une bielle comme indiqué ci-dessus, l'autre organe de réglage est entraîné d'un mouvement continu avec la came motrice ou le levier moteur.

Alternativement, une même came motrice peut présenter six surfaces de travail, à savoir deux surfaces de travail sensiblement circonférentielles raccordées entre elles par une surface de travail sensiblement radiale, coopérant avec un premier élément pivotant associé à l'un des organes de réglage, et une surface de travail sensiblement circonférentielle raccordant entre elle une surface de travail sensiblement radiale et une surface de travail oblique, coopérant avec un second élément pivotant associé à l'autre organe de réglage.

On peut aussi prévoir que la came motrice entraînant l'organe de réglage au moyen de ses surfaces de travail constitue également un levier entraînant l'autre organe de réglage par l'intermédiaire d'une bielle.

Dans un autre exemple de mise en oeuvre de l'invention, les moyens de transmission comprennent un levier moteur coopérant avec une came pivotante, qui entraîne l'un des organes de réglage, par des surfaces de travail de celles-ci dont l'une au moins s'étend circonférentiellement par rapport au levier lorsqu'elle est en prise avec celui ci pour maintenir la came en position fixe sur une portion de la course de l'organe de commande, et dont une autre au moins s'étend radialement ou obliquement par rapport au levier lorsqu'elle est en prise avec celui-ci pour faire pivoter la came sur une autre portion de ladite course.

Quel que soit le mode de réalisation des moyens de transmission, le dispositif peut comprendre un moteur pour entraîner les organes de réglage par l'intermédiaire de ceux-ci, et un sélecteur marche/arrêt, le moteur amenant les deux organes de réglage à leur état d'ouverture minimale lorsque le sélecteur est en position d'arrêt et les amenant aux états définis par la position de l'organe de commande lorsque le sélecteur est en position de marche.

L'invention a également pour objet une installation d'aération et de chauffage de l'habitacle d'un véhicule automobile, comprenant un dispositif de commande tel que défini ci-dessus, et des moyens pour interrompre une arrivée de chaleur à un échangeur de chaleur servant à réchauffer l'un des courants d'air lorsque l'organe de commande est dans une position d'arrêt pour laquelle l'organe de réglage du débit d'air chaud est dans un état d'ouverture minimale.

Les moyens d'interruption peuvent être mis en oeuvre automatiquement lorsque l'organe de commande est dans la position d'arrêt. Alternativement, les moyens d'interruption peuvent être manuels, l'organe de commande ne pouvant être écarté de sa position d'arrêt que si les moyens d'interruption sont hors service, c'est-à-dire n'interrompent pas l'arrivée de chaleur à l'échangeur de chaleur.

D'autres caractéristiques et avantages de l'invention ressortiront de la description détaillée donnée ci-après de deux exemples de réalisation, et les dessins annexés, dans lesquels :

- les figures 1 à 8 représentent schématiquement les moyens de transmission mécaniques de différents dispositifs de commande selon l'invention;

- les figures 1A, 3A, 3B, 3C, 5A, 5B, 7A et 8A sont les diagrammes relatifs au fonctionnement de différents dispositifs selon l'invention;

- les figures 9 et 10 représentent schématiquement deux exemples de tableaux de commande pour un dispositif selon l'invention.

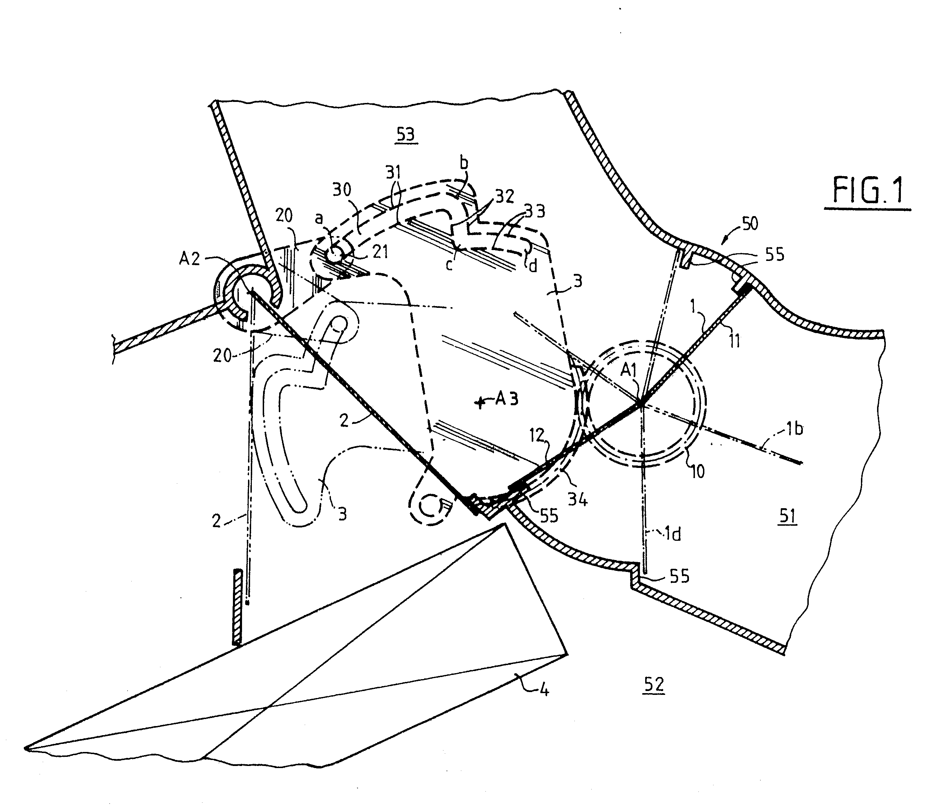

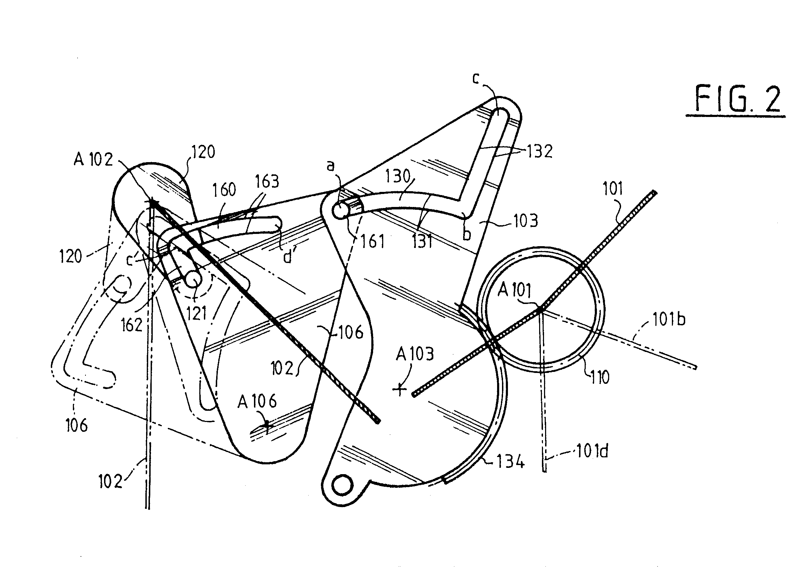

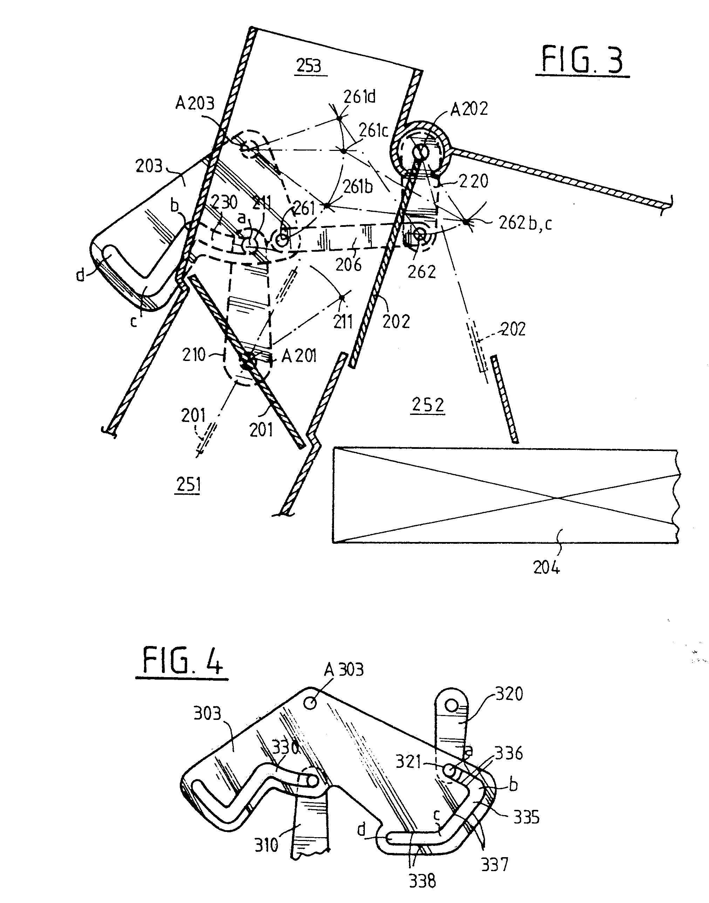

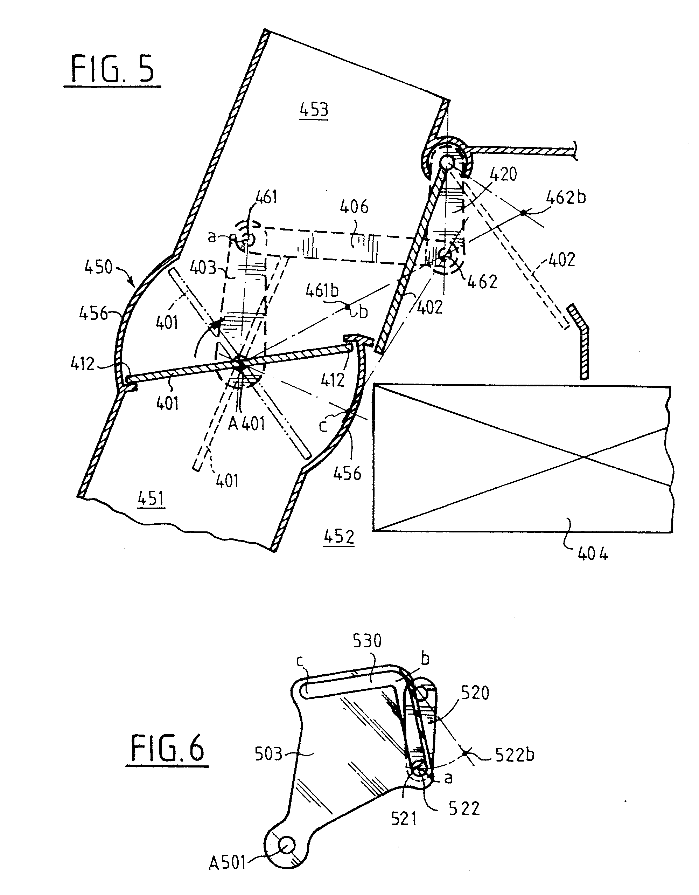

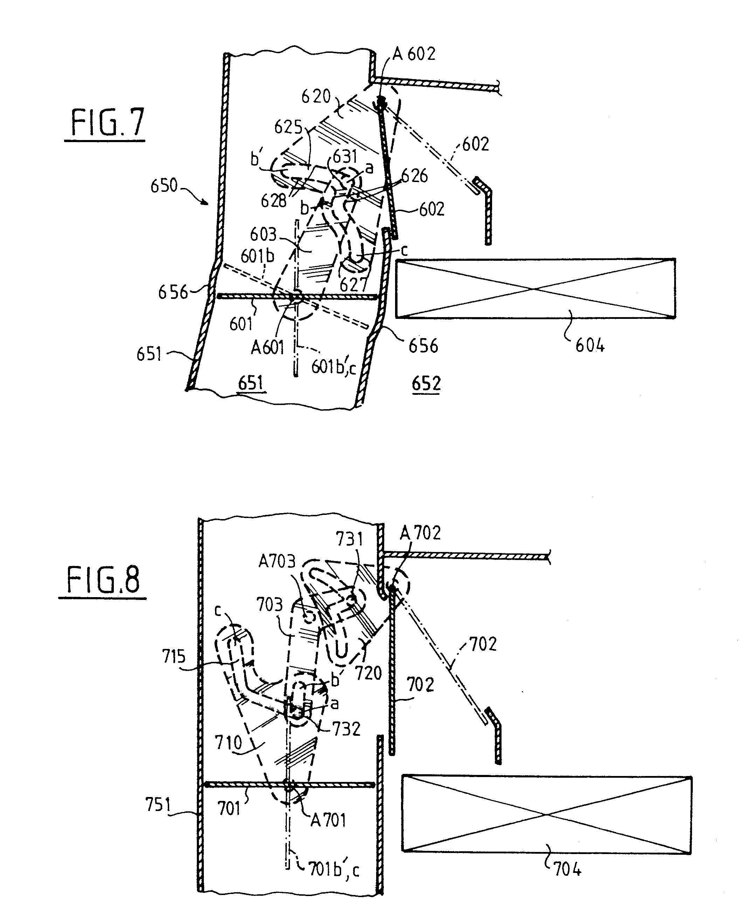

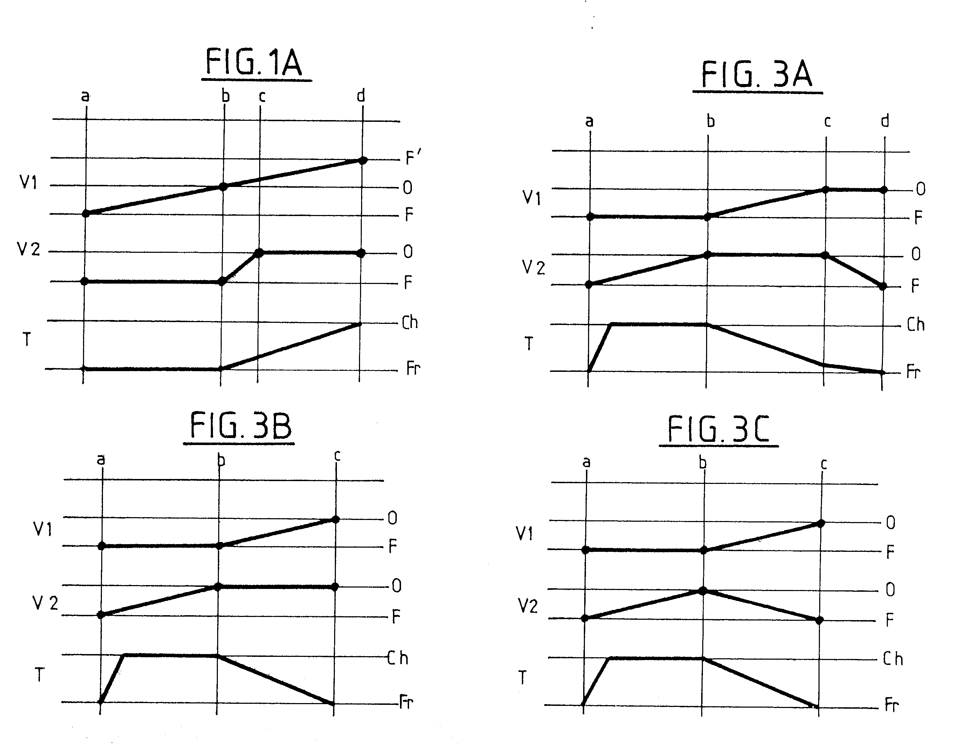

La figure 1 illustre une partie d'une installation d'aération et de chauffage de l'habitacle d'un véhicule automobile. Une conduite 51 amène un courant d'air froid prélevé à l'extérieur du véhicule vers une région de réglage et de mélange 50. Par ailleurs, un échangeur de chaleur 4, tel qu'un radiateur parcouru par de l'eau chaude provenant d'un circuit de refroidissement du moteur du véhicule, est interposé sur une conduite 52, où circule un courant d'air froid en amont de l'échangeur, l'air réchauffé par le radiateur étant également amené à la région de réglage et de mélange 50. Une conduite 53 canalise un courant d'air de la région 50 vers une ou plusieurs bouches d'aération et de chauffage de l'habitacle.

Le débit et la température de l'air dans la conduite 53 sont fonction des positions de deux volets pivotants 1 et 2, qui peuvent obturer à un degré variable respectivement la sortie de la conduite 51 et celle de la conduite 52, en aval du radiateur 4.

Les volets 1 et 2 sont entraînés de façon coordonnée par une came motrice 3, dont la position angulaire est définie par un organe de commande non représenté, situé sur le tableau de bord du véhicule, et que l'utilisateur peut déplacer selon une course déterminée en un mouvement unique. La came 3 présente une fente 30 que traverse un ergot 21 qui s'étend parallèlement à l'axe de pivotement A3 de la came 3 à partir d'un levier 20 pouvant lui-même pivoter autour d'un axe A2 parallèle à l'axe A3. Les bords latéraux de la fente 30 définis sent des surfaces de travail de la came coopérant avec l'ergot 21 pour déterminer la position angulaire du levier 20 en fonction de celle de la came. Une première surface de travail sensiblement circonférentielle 31 s'étend sensiblement selon un arc de cercle compris entre une extrémité a et un point intermédiaire b de la fente. A cette première surface de travail se raccorde une seconde surface de travail 32 sensiblement radiale s'étendant selon une portion de rayon entre le point b et un point c. Enfin, une troisième surface de travail 33 sensiblement circonférentielle s'étend selon un arc de cercle du point c à la seconde extrémité d de la fente 30.

Dans l'état du dispositif représenté en trait fort à la figure 1, l'ergot 21 se trouve à l'extrémité a de la fente 30 de la came. Le volet 2, solidaire du levier 20, est dans une position d'obturation du passage entre la conduite 52 et la région 50.

Lorsque la came 3 pivote dans le sens inverse des aiguilles d'une montre, la surface de travail 31 coopère avec l'ergot 21 pour maintenir tout d'abord celui-ci à une distance constante de l'axe A3, de sorte que le levier 20 et le volet 2 restent fixes. Lorsque l'ergot 21 atteint le point b de la fente 30, il vient coopérer avec la surface de travail radiale 32 qui l'amène à se rapprocher de l'axe A3. Le levier 20 et le volet tournent alors dans le sens des aiguilles d'une montre, ouvrant progressivement le passage entre la conduite 52 et la région 50. Lorsque l'ergot atteint le point c, le volet 2 prend la position illustrée en trait mixte, correspondant à un état d'ouverture maximale du passage entre la conduite 52 et la région 50. Cette position est maintenue pendant la phase finale du mouvement de la came, au cours de laquelle l'ergot parcourt l'arc cd en coopérant avec la surface de travail 33. La position finale de la came 3 et celle du levier 20 sont également illustrées en trait mixte.

La came 3 présente également une denture en arc de cercle 34 coopérant avec un pignon 10 pouvant pivoter autour d'un axe A1 parallèle à l'axe A3 et dont est solidaire le volet 1. Lors du mouvement de la came dans le sens inverse des aiguilles d'une montre tel qu'il vient d'être décrit, le pignon 10 et le volet 1 pivotent de façon continue dans le sens des aiguilles d'une montre. Lorsque la came est dans la position a, correspondant à la position extrême a de l'organe de commande (pour simplifier l'exposé, on désigne par les mêmes lettres les positions de l'organe de commande et de la came motrice, et celles de l'ergot 21 dans la fente 30 de cette dernière), le volet 1 est dans la position représentée en trait plein où il obture pratiquement complètement le passage entre la conduite 51 et la région de réglage et de mélange 50. A la position b de l'organe de commande et de la came correspond une position intermédiaire du volet 1, représenté en trait mixte et repéré 1b, pour laquelle le degré d'ouverture du passage est maximal. Enfin, à la position extrême d de la came correspond une position extrême 1d du levier 1 pour laquelle le passage est de nouveau fermé.

Le volet 1 présente deux parties sensiblement planes 11 et 12 se raccordant entre elles selon un angle obtus au niveau de l'axe A1, et dont les bords libres coopèrent avec des butées 55 de la paroi de la conduite 51 pour procurer une fermeture étanche de cette dernière dans les deux positions extrêmes du volet.

Le diagramme de la figure 1A illustre les mouvements des volets tels qu'ils viennent d'être décrits, et la température résultante de l'air envoyé aux bouches d'aération par la conduite 53. Les trois courbes repérées V1, V2 et T représentent respectivement la position angulaire du volet 1, celle du volet 2 et la température de l'air, portées en ordonnées, en fonction de la position de l'organe de commande.

Lorsque ce dernier passe de sa position extrême de départ a à sa position extrême d'arrivée d, le volet 1 passe d'une position extrême de fermeture repérée F à une position extrême de fermeture repérée F', en passant par une position intermédiaire d'ouverture maximale repérée O pour la position b de l'organe de commande. Dans le même temps, le volet 2 reste dans une position extrême de fermeture F sur la portion ab de la course de l'organe de commande, puis passe progressivement à une position extrême d'ouverture maximale O sur la portion intermédiaire bc de la course, et reste dans cette position O sur la portion finale cd de la course.

Sur la portion ab de la course, seul de l'air froid est envoyé dans la conduite 53, à un débit progressivement croissant. Ensuite, le débit d'air chauffé par le radiateur est progressivement croissant sur la portion bc, puis constant sur la portion cd, tandis que le débit d'air froid décroît progressivement de la position b à la position d, ce qui détermine une température de l'air croissant progressivement d'une valeur Fr qui est celle de l'air extérieur à une valeur Ch qui est celle de l'air réchauffé par l'échangeur 4. La position extrême a de l'organe de commande est une position d'arrêt pour laquelle le débit d'air dans la conduite 53 est sensiblement nul.

La figure 2 est relative à une variante dans laquelle des volets 101 et 102 exécutent les mêmes mouvements et remplissent les mêmes fonctions que les volets 1 et 2 de la figure 1. Une came motrice 103 pivotant autour d'un axe A103 en corresPondance de la course d'un organe de commande non représenté présente une denture en arc de cercle 134 qui coopère avec un pignon 110 pour faire pivoter ce dernier, et le volet 101 qui en est solidaire, autour d'un axe A101 de la façon décrite à propos de la figure 1. La came motrice 103 présente une fente 130 dans laquelle s'engage un ergot 161 appartenant à une seconde came 106 qui peut pivoter autour d'un axe A106 parallèle aux axes A103 et A101. Les bords latéraux de la fente 130 définissent des surfaces de travail propres à coopérer avec l'ergot 161 pour déterminer la position angulaire de la came 106 en fonction de celle de la came 103. Une première surface de travail circonférentielle 131 s'étend d'une extrémité a à un point intermédiaire b de la fente 130, et une seconde surface de travail radiale 132 s'étend entre le point b et l'extrémité opposée c de la fente 130, plus éloignée de l'axe A103 que l'arc ab.

La seconde came 106 présente à son tour une fente 160 dans laquelle s'engage un ergot 121 appartenant à un levier 120 pouvant pivoter autour d'un axe A102 parallèle à l'axe A103, et solidaire du volet 102. Les bords latéraux de la fente 160 définissent des surfaces de travail qui coopèrent avec l'ergot 121 pour déterminer la position angulaire du levier 120 en fonction de celle de la came 106. Une surface de travail radiale 162 s'étend entre une extrémité b' de la fente 160 et un point intermédiaire c' plus éloigné de l'axe A106 que le point b'. Une autre surface de travail circonférentielle 163 s'étend entre le point c' et la seconde extrémité d' de la fente 160.

Lorsque l'organe de commande est dans une position extrême de départ qu'on appellera a, les différents éléments illustrés à la figure 2 se trouvent dans les positions indiquées en trait plein. Les ergots 161 et 121 sont respectivement aux extrémités a et b' des fentes 130 et 160, et les deux volets sont dans des positions extrêmes de fermeture. Lorsque l'organe de commande passe de la position a à une position intermédiaire b, la came 103 pivote de façon que l'ergot 161 parcourt l'arc de cercle ab en restant à une distance constante de l'axe A103. La came 106 reste donc fixe, de même que l'ergot 121 et le levier 120. De la position b à la position c de l'organe de commande, l'ergot 161 parcourt la portion de rayon bc de la came 103 en pivotement. Il s'éloigne donc de l'axe A103, déterminant un pivotement de la seconde came 106 dans le même sens que le pivotement de la came 103, c'est-à-dire dans le sens contraire des aiguilles d'une montre. En même temps, l'ergot 121 parcourt la portion b'c' de la fente 160 de la came 106, déterminant un pivotement du levier 120 et du volet 102 dans le sens des aiguilles d'une montre. Sur la portion finale cd de la course de l'organe de commande, l'ergot 161 reste à l'extrémité c de la fente 130, la came 160 continue de pivoter et l'ergot 120 parcourt l'arc c'd', maintenant le levier 120 et le volet 102 dans la position extrême d'ouverture de celui-ci.

Les positions finales des cames 103 et 106 du levier 120 et du volet 102 sont indiquées en trait mixte, ainsi que la position intermédiaire 101b et la position finale 101d du volet 101.

Le diagramme de la figure 1A reste entièrement valable pour le dispositif de la figure 2.

A la figure 3, les numéros de référence du radiateur 204 et des conduites 251, 252 et 253 sont obtenues en ajoutant le nombre 200 aux numéros de référence des éléments de la figure 1 dont ils sont les équivalents fonctionnels. Le débit de l'air froid arrivant par la conduite 251 et celui de l'air réchauffé arrivant par la conduite 252 sont réglés respectivement par des volets pivotants 201 et 202, lesquels sont entraînés par une came motrice 203 qui pivote autour d'un axe A203 en correspondance de la course d'un organe de commande non représenté.

La came 203 présente, comme la came 3 de la figure 1, une fente 230 traversée par un ergot 211 et définissant deux surfaces de travail circonférentielles raccordées entre elles par une surface de travail radiale. L'ergot 211 appartient à un levier pivotant 210 solidaire du volet 201.

Dans la position représentée sur la figure, l'ergot 211 se trouve à l'extrémité a de la fente 230 la plus proche de l'axe A203, ce qui correspond à la position de départ a de l'organe de commande. Le volet 201 est alors dans une position extrême de fermeture figurée en trait plein. Lors de la course de l'organe de fermeture, le volet 201 est entraîné de la meme faon que le volet 2 de la figure 1. Il reste d'abord dans sa position initiale de fermeture pour une portion initiale ab de la course au cours de laquelle l'ergot 211 parcourt l'arc ab de la fente 230, puis passe progressivement à une position extrême d'ouverture maximale représentée en trait interrompu, pour une portion bc de la course au cours de laquelle l'ergot parcourt la partie radiale bc de la fente 230, et reste enfin dans cette même position pour la portion finale cd de la course au cours de laquelle l'ergot 211 parcourt la partie circonférentielle cd de la fente, de rayon plus grand que la partie ab.

Une bielle 206 est articulée par ses deux extrémités respectivement à la came 203 et à une manivelle 220 pouvant pivoter autour d'un axe A202 parallèle à l'axe A203 et à l'axe A201 du volet 201, le volet 202 étant solidaire de la manivelle 220. Pour la position de départ a de l'organe de commande, le volet 202 est dans une position de fermeture représentée en trait plein. Les points d'articulation de la bielle 206 sont choisis de telle sorte que le volet 202 reprenne la même position de fermeture pour la position d de l'organe de commande que pour la position a. Dans ces conditions, au cours de la course de l'organe de commande, le volet 202 passe par une position d'ouverture maximale représentée en trait interrompu, et correspondant à un alignement des extrémités de la bielle avec l'axe A203, avant de revenir à sa position de fermeture. Du fait de la transmission par bielle, le mouvement du volet 202 est très lent au voisinage de la position médiane de la came 203, de sorte que le volet 202 reste pratiquement dans sa position d'ouverture maximale sur la portion bc de la course de l'organe de commande. Les références 261b, 261c et 261d indiquent respectivement les emplacements de l'axe d'articulation 261 de la bielle 206 sur la came 203 pour les positions b, c et d de l'organe de commande; la référence 262b,c indique l'emplacement de l'axe d'articulation 262 de la bielle et de la manivelle 220 pour les positions b et c de l'organe de commande.

La figure 3A est un diagramme analogue à celui de la figure 1A, relatif au dispositif de la figure 3, les courbes V1 et V2 correspondant respectivement aux volets 201 et 202. Chacun de ces volets présente une position extrême de fermeture et une position extrême d'ouverture maximale. Au cours de la première partie ab de la course de l'organe de commande, le volet de réglage du débit d'air froid reste fermé tandis que le réglage du débit d'air chaud s'ouvre progressivement. On obtient donc, dès le début du mouvement, une température correspondant à celle Ch de l'air chaud non mélangé, avec un débit croissant. Dans la portion bc de la course, le volet de l'air froid s'ouvre progressivement tandis que le volet d'air chaud reste sensiblement dans son état d'ouverture maximale. La température de l'air envoyé dans la conduite 253 est donc décroissante. Du fait de la perte de charge dans le radiateur 204, le débit d'air froid devient sensiblement supérieur au débit d'air chaud, de sorte que pour la position c, bien que le volet d'air chaud soit encore pratiquement à son ouverture maximale, la température de l'air mélangé est voisine de la température Fr de l'air froid. Enfin, sur la portion cd de la course, le volet d'air chaud se referme tandis que le volet d'air froid reste à son ouverture maximale, de sorte que la température de l'air envoyé dans la conduite 253 continue de décroître jusqu'à la valeur Fr.

Il ressort des diagrammes des figures 1A et 3A que l'utilisation des dispositifs correspondants est différente. Avec les dispositifs des figures 1 et 2, si on veut recevoir de l'air froid par les bouches d'aération, il faut manoeuvrer l'organe de commande dans la portion ab de sa course, sur une étendue qui est fonction du débit d'air désiré. Si on désire de l'air chaud, il faut d'abord franchir la portion ab de la course pour atteindre la portion bd dans laquelle se fait le réglage de la température. Ces systèmes présentent l'inconvénient que de l'air froid est d'abord envoyé au cours de la portion ab de la course, ce qui peut être très désagréable par temps froid.

Le dispositif de la figure 3 évite cet inconvénient, puisque de l'air chaud est envoyé dès le début de la course de l'élé ment de commande. En revanche, lorsque l'on veut obtenir de l'air froid, on reçoit d'abord de l'air chaud, ce qui peut être gênant par temps chaud. Cet inconvénient peut également être évité en adjoignant à l'installation un robinet pour interrompre l'arrivée d'eau chaude au radiateur 204 lorsque l'organe de commande est dans la position d'arrêt a. De cette façon, lorsqu'on parcourt rapidement la portion ac de la course de l'organe de commande, le radiateur n'a pas le temps de s'échauffer suffisamment pour communiquer au courant d'air qui le traverse une augmentation de température sensible et on obtient directement de l'air froid.

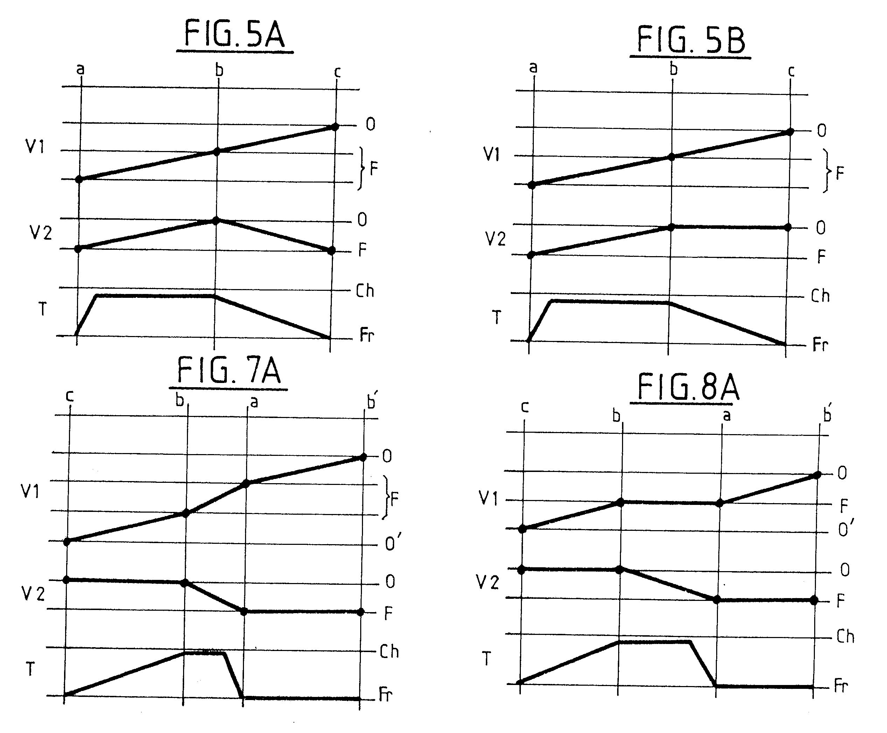

La figure 4 représente des moyens de transmission équivalents à ceux de la figure 3, conduisant aux mêmes mouvements du volet de réglage et par conséquent à un fonctionnement de l'installation conforme au diagramme de la figure 3A.

Les moyens de transmission comprennent une came motrice 303 présentant une fente 330 tout à fait semblable à la fente 230 de la came 203, et entraînant de la même façon un levier 310 solidaire d'un volet de réglage d'air froid non représenté, monté de la même façon que le volet 201 de la figure 3.

La came 303 présente en outre une seconde fente 335 traversée par un ergot 321 d'un levier 320 et dessinée de façon à communiquer à ce dernier un mouvement sensiblement semblable à celui de la manivelle 220, le levier 320 étant solidaire d'un volet de réglage d'air chaud non représenté fonctionnant de la même façon que le volet 202.

A cet effet, la fente 335 définit trois surfaces de travail, à savoir une première surface de travail 336 définie par une portion de la fente s'étendant entre une première extrémité a et un point b, une seconde surface de travail 337 s'étendant circonférentiellement entre le point b et un point c, et une troisième surface de travail 338 s'étendant obliquement entre le point c et la seconde extrémité d. Les extrémités a et d sont plus proches de l'axe A303 de la came que l'arc bc, et l'extrémité d est plus éloignée du rayon ab que le point c.

Les dispositifs représentés aux figures 3 et 4 peuvent être simplifiés en supprimant la portion de la fente ou des fentes de la came motrice correspondant à la portion cd de la came de l'organe de commande, à condition que des moyens soient prévus, par exemple sous forme d'un robinet d'arrêt d'eau chaude, pour interrompre l'apport de chaleur à l'échangeur de chaleur lorsque l'organe de commande est dans la position c, qui constitue alors sa position terminale.

Pour cette position, on obtient à la bouche d'aération uniquement de l'air non réchauffé. Le diagramme correspondant est représenté figure 3B.

En outre, on peut remplacer la portion circonférentielle bc de la fente 335 de la came 303 (figure 4) par une portion oblique ramenant le volet dans sa position de départ fermée. On obtient alors une fermeture progressive du volet d'air chaud simultanée à l'ouverture progressive du volet d'air froid. Le diagramme correspondant est celui de la figure 3C. Le même résultat peut être obtenu dans le dispositif de la figure 3 en modifiant l'entraînement de la manivelle 220 pour qu'il soit conforme à celui de la manivelle 420 de la figure 5 décrit ci-après.

On retrouve à la figure 5 des éléments dont la fonction est semblable à celle des éléments correspondants dans la figure 1, et dont le numéro de référence est obtenu en ajoutant le nombre 400 à ceux de ces éléments correspondants. Il s'agit d'une conduite d'amenée directe d'air froid 451, d'une conduite 452 d'amenée d'air à travers un radiateur de réchauffage 404, d'une région de réglage et de mélange 450, d'une conduite de départ d'air vers l'habitacle 453, et de volets de réglage des débits d'air froid et d'air chaud respectivement 401 et 402.

Le volet 401, qui peut pivoter autour d'un axe A401 et s'étend symétriquement de part et d'autre de celui-ci, est solidaire d'un levier moteur 403 dont la position angulaire est définie par un organe de commande non représenté. Le volet 401 est représenté en trait plein dans une position extrême de fermeture correspondant à une position de départ a de l'organe de commande. Pour une portion ab de la course de l'organe de commande, le volet 401 pivote jusqu'à la position indiquée en trait mixte, son bord libre 412 restant pratiquement au contact d'une portion de révolution 456 de la paroi de la conduite 451. Le volet 451 reste ainsi pratiquement dans un état de fermeture.

Au-delà de la position b de l'organe de commande, le volet s'écarte de la paroi de la conduite pour atteindre la position d'ouverture maximale, indiquée en trait interrompu, lorsque l'organe de commande arrive dans sa position de fin de course c.

Le second volet 402 est solidaire d'une manivelle 420 reliée par une bielle 406 au levier moteur 403. Pour les positions a et c de l'organe de commande, le volet 402 est dans la position extrême de fermeture illustrée en trait plein. Pour la position b, les axes d'articulation 461 et 462 de la bielle au levier 403 et à la manivelle 420 respectivement viennent en des positions 461b et 462b alignées avec l'axe de pivotement A401 du levier moteur, correspondant à une position extrême d'ouverture maximale du volet 402 indiquée en trait interrompu.

Le diagramme des états des volets et de la température de l'air envoyé aux bouches d'aération, correspondant à la figure 5, est représenté à la figure 5A. Dès que l'organe de commande quitte sa position extrême a, pour laquelle les deux volets sont fermés, le volet d'air chaud (courbe V2) commence à s'ouvrir, tandis que le volet d'air froid pivote tout en restant dans l'état de fermeture, et la température du courant d'air obtenu est sensiblement celle de l'air réchauffé par l'échangeur de chaleur. Cette température est maintenue jusqu'à la position b correspondant à l'ouverture maximale du volet d'air chaud. Sur la portion bc de la course de l'organe de commande, le volet d'air froid (courbe V1) s'ouvre progressivement et le volet d'air chaud se referme progressivement, de sorte que la température de l'air décroît progressivement jusqu'à celle de l'air extérieur.

Dans l'installation de la figure 5, lorsque l'organe de commande est entre les positions a et b, le volet d'air froid 401 ne ferme pas la conduite 451 de façon totalement étanche en raison du jeu existant entre le bord du volet et la paroi 456 de la conduite. Il en résulte que la température maximale de l'air envoyé aux aérateurs est légèrement inférieure à la température de l'air réchauffé par le radiateur, notée Ch à la figure 5A. Cette remarque est également valable pour les réalisations décrites ci-après.

Des mouvements des volets identiques à ceux qui viennent d'être décrits peuvent être obtenus en remplaçant le levier 403, la bielle 406 et la manivelle 420 de la figure 5 par une came motrice 503 et un levier 520 tels que représentés à la figure 6.

La came 503 présente une fente 530 coopérant avec un ergot 521 du levier 520. La fente 530 comprend deux parties s'étendant respectivement entre un point extrême a et un point intermédiaire b et entre le point b et un point extrême opposé c. Ces deux portions de fente sont sensiblement symétriques l'une de l'autre par rapport au plan défini par le point b et l'axe de rotation A501 de la came, et obliques par rapport à ce plan, les extrémités a et c étant plus proches de l'axe que le point b.

Lorsque la came 503 pivote autour de l'axe A501 en correspondance de la course de l'organe de commande, l'ergot 521 parcourt la fente 530. Pendant la première partie ab de la course, le levier 520 passe de la position extrême illustrée sur la figure à une autre position extrême pour laquelle l'axe 522 de l'ergot est dans la position 522b. Pour la partie finale bc de la course, le levier accomplit le mouvement inverse.

Le volet de réglage d'air froid, solidaire de la came motrice 503, et le volet de réglage d'air chaud, solidaire du levier 520, accomplissent les mêmes mouvements que les volets 401 et 402 respectivement de la figure 5.

Il est possible, en modifiant les positions des axes d'articulation de la bielle 406 de la figure 5, ou en remplaçant la portion oblique bc de la fente 530 de la figure 6 par une portion circonférentielle, de maintenir le volet de réglage d'air chaud sensiblement dans sa position extrême d'ouverture lorsque l'organe de commande parcourt la portion bc de sa course. On obtient alors le diagramme de fonctionnement de la figure 5B, dans lequel l'ouverture progressive du volet de réglage d'air froid sur la portion bc entraîne un abaissement progressif de la température de l'air, laquelle peut atteindre la valeur Fr correspondant à l'air extérieur si on prévoit un moyen d'interruption de l'apport de chaleur comme indiqué à propos de la figure 3B.

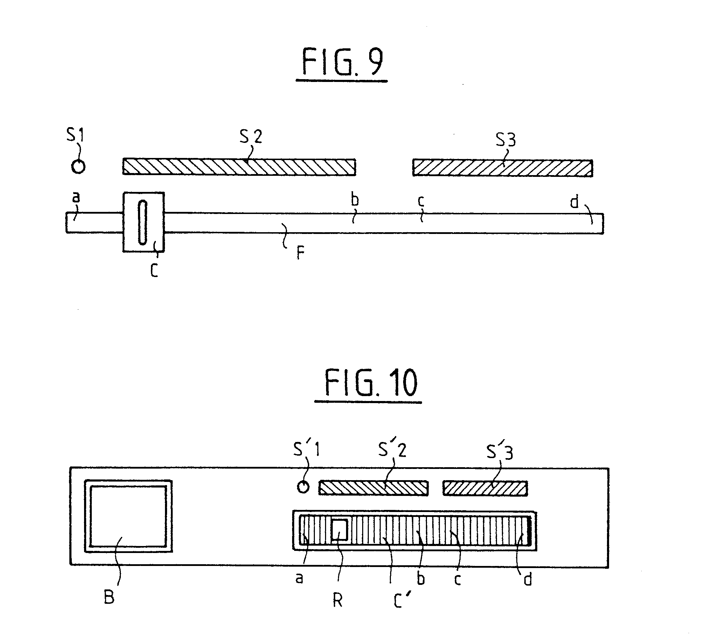

Les dispositifs illustrés aux figures 7 et 8 diffèrent de ceux décrits précédemment en ce que la position d'arrêt de l'organe de commande, pour laquelle les deux volets de réglage sont en position de fermeture, est une position intermédiaire sur la course de l'organe de commande, à partir de laquelle celui-ci doit être déplacé dans un sens pour obtenir un courant d'air froid et dans le sens opposé pour obtenir un courant d'air chaud. On évite ainsi l'inconvénient signalé ci-dessus consistant à recevoir d'abord de l'air froid lorsqu'on désire de l'air chaud, ou inversement.

A la figure 7, la conduite d'arrivée d'air froid 651, la conduite de réchauffage d'air 652, la région de mélange et de réglage 650 et la conduite de départ d'air 653 sont semblables aux éléments correspondants de la figure 1.

Un levier moteur 603 pivote autour d'un axe A601 en correspondance de la course d'un organe de commande non représenté. Un volet de réglage d'air froid 601 solidaire du levier 603 s'étend symétriquement de part et d'autre de l'axe A601. Pour une portion intermédiaire de la course de l'organe de commande comprise entre un point a et un point b, le volet 601 pivote de la position indiquée en trait plein à une position indiquée en trait mixte et notée 601b, son bord libre restant pratiquement adjacent à une portion de révolution 656 de la paroi de la conduite 651, de sorte que celle-ci reste pratiquement obturée.

Au-delà de la position b, le volet 601 s'écarte de la paroi et atteint, pour la position extrême c de l'organe de commande, une position extrême d'ouverture maximale représentée en trait mixte et notée 601c. Lorsque l'organe de commande s'éloigne de la position a dans le sens opposé à celui de la position b, le levier 601 pivote également dans le sens opposé pour atteindre, lorsque l'organe de commande arrive à sa position extrême b', une position extrême d'ouverture maximale 601b' qui est identique à la position 601c, à ceci près que les parties du volet situées symétriquement par rapport à l'axe de pivotement sont échangées.

Le levier 603 présente un ergot 631 qui s'engage dans une fente 625 d'une came 620 pouvant pivoter autour d'un axe A602 parallèle à l'axe A601. Un volet de réglage 602 du débit d'air chaud dans la conduite 652 est solidaire de la came 620.

Les bords de la fente 625 définissent des surfaces de travail de la came coopérant avec l'ergot 631 pour provoquer l'entraînement de la came par le levier 603. Les bords de la fente 625 définissent trois surface de travail 626, 627 et 628. La surface de travail 626 s'étend radialement par rapport au levier 603 dans la position représentée correspondant au point a de la course de l'organe de commande. La portion correspondante de la fente 625 s'étend entre un point intermédiaire noté a, occupé par l'ergot 631 dans la position illus trée, à un autre point intermédiaire b, plus éloigné de l'axe A602 et plus proche de l'axe A601 que le point a.

Une portion extrême de la fente 625 définissant la surface de travail 628 s'étend circonférentiellement par rapport au levier 603, toujours dans la position illustrée, entre le point a et une extrémité b'. Ainsi, lorsque l'organe de commande exécute la partie ab' de sa course, l'ergot 631 parcourt l'arc ab' sans provoquer aucun mouvement de la came 620.

Pour la portion ab de la course de l'organe de commande, l'ergot 631 se déplace dans la portion ab de la fente 625 en faisant pivoter la came 620 de façon à faire passer le volet 602 de la position extrême de fermeture indiquée en trait plein à la position extrême d'ouverture maximale indiquée en trait mixte. Au terme de ce mouvement de pivotement de la came, la portion extrême de la fente 625 s'étendant selon un arc de cercle entre le point b et l'extrémité c opposée à l'extrémité b' prend une orientation circonférentielle par rapport au levier 603. Ainsi, lorsque l'organe de commande poursuit sa course de la position b à la position c, l'ergot 631 parcourt l'arc correspondant de la fente en maintenant immobile la came 620.

Le diagramme de la figure 7A illustre le fonctionnement de l'installation. Les deux volets sont dans un état de fermeture pour la position intermédiaire a de l'organe de commande. Lorsqu'on manoeuvre celui-ci en direction de l'extrémité b', le volet d'air chaud V2 reste fermé tandis que le volet d'air froid V1 s'ouvre progressivement. On obtient alors un courant d'air froid à débit croissant. Lorsqu'on manoeuvre l'organe de commande dans le sens opposé à partir de la position a, le volet d'air froid V1 reste fermé sur la portion ab de la course, tandis que le volet d'air chaud V2 s'ouvre progressivement. On obtient ainsi un courant d'air chaud à une température peu inférieure à celle de l'air sortant du radiateur, avec un débit croissant. Sur la portion terminale bc du trajet de l'organe de commande, le volet d'air froid V1 s'ouvre progressivement, tandis que le volet d'air chaud V2 reste immobile, conduisant à une réduction progressive de la température de l'air.

Le dispositif représenté à la figure 8 comprend un levier à deux branches 703 pouvant pivoter autour d'un axe A703 en fonction de la position d'un organe de commande non représenté. L'une des branches du levier 703 porte un ergot 731 qui coopère avec une came 720 semblable à la came 620 de la figure 7 pour faire pivoter cette came, et le volet de réglage d'air chaud 702 qui en est solidaire, de la façon décrite à propos de la figure 7.

L'autre branche du levier 703 comporte un ergot 732 qui traverse une fente 715 d'une autre came 710 pouvant pivoter autour d'un axe A701 parallèle aux axes de pivotement A702 et A703 de la came 720 et du levier 703. Un volet de réglage d'air froid 701 s'étendant symétriquement de part et d'autre de l'axe A701 est solidaire de la came 710.

Dans la position illustrée, correspondant à un point intermédiaire a de la course de l'organe de commande, l'ergot 732 se trouve en un point intermédiaire a de la fente 715. Dans cette position, une portion intermédiaire de la fente, s'étendant entre le point a et un point b, s'étend circonférentiellement par rapport au levier 703. Ainsi, quand l'organe de commande parcourt une portion intermédiaire ab de sa course, l'ergot 732 parcourt la portion correspondante ab de la fente, la came 710 et le volet 701 restant fixes, ce dernier s'étendant en travers de la conduite d'air chaud 751 de façon à obturer sensiblement celle-ci. La portion de la fente 715 s'étendant du point b à une extrémité c de celle-ci est oblique par rapport au levier 703, l'extrémité c étant plus proche de l'axe A703 et plus éloignée de l'axe A701 que le point b. Le déplacement de l'ergot 732 le long de la portion de la fente bc, correspondant à la portion bc de la course de l'organe de commande, détermine donc un pivotement de la came 710 et du volet 701, ce dernier venant prendre la position extrême d'ouverture maximale notée 701c.

La portion de la fente 715 comprise entre le point a et l'extrémité b' opposée à l'extrémité c s'étend radialement par rapport au levier 703 dans la position illustrée. Lorsque l'ergot 703 se déplace du point a au point b' en correspondance de la portion ab' de la course de l'organe de commande, la came 710 et le volet 701 pivotent dans le sens opposé à celui du pivotement décrit précédemment, le volet 701 venant dans une position finale de pleine ouverture notée 701b' qui diffère de la position 701c uniquement par l'échange des parties du volet situées de part et d'autre de l'axe A701.

Comme le montre le diagramme de la figure 8A, le fonctionnement de l'installation est le même que celui de l'installation comportant le dispositif de commande de la figure 7, la plage de fermeture du volet d'air froid correspondant à la portion ab de la course de l'organe de commande étant simplement remplacée par une position de fermeture unique de ce volet.

La figure 9 montre un organe de commande utilisable pour la manoeuvre du dispositif de la figure 1, sous la forme d'un curseur C ou de l'extrémité d'un levier pouvant être déplacé manuellement le long d'une fente F prévue au tableau de bord d'une automobile. La course de l'organe de commande C s'étend entre une extrémité a et une extrémité d en passant par les points intermédiaires b et c, entraînant le levier 3 de la figure 1 par des moyens mécaniques quelconques.

Un symbole S1 en regard de la position a de l'organe de commande C indique que cette position correspond à l'arrêt de la ventilation. Un symbole S2 placé en regard de la portion ab de la course indique que celle-ci correspond à un courant d'air froid, et peut également indiquer que ce courant d'air froid a un débit croissant de la position a vers la position b. Enfin, un troisième symbole S3 placé en regard de la portion bd de la course de l'organe de commande indique que la température du courant d'air envoyé aux aérateurs va en croissant.

Dans la variante de la figure 10, l'organe de commande C' est une molette présentant un repère R qui peut se déplacer sur une course ad, en passant par des positions intermédiaires b et c, lorsqu'on fait tourner la molette. En regard des positions du repère R sont apposés des symboles S'1, S'2 et S'3 ayant respectivement les mêmes significations que les symboles S1, S2 et S3. A côté de la molette C', sur le tableau de bord du véhicule, est prévu un bouton marche/arrêt B. Le bouton B et la molette C' sont associés à un organe moteur tel qu'un micromoteur entraînant la came 3 de la figure 1, de telle façon que cette dernière soit dans la position correspondant à la fermeture des deux volets lorsque le bouton B est en position "arrêt" et que la position de la came soit celle qui correspond à la position de la molette C' lorsque le bouton B est en position "marche".

Bien entendu, les organes de commande des figures 9 et 10 peuvent également être utilisés avec les autres dispositifs de commande décrits, en y associant les symboles appropriés à chaque cas de fonctionnement.

## Revendications

1. Dispositif pour la commande coordonnée de deux organes de réglage de débit respectifs (1, 2) pour deux courants de fluide, caractérisé en ce qu'il comprend un organe de commande (C) pouvant être déplacé suivant une course univoque (a, d) et des moyens mécaniques de transmission (3, 10,20) pour entraîner les organes de réglage selon le déplacement de l'organe de commande de telle façon que sur une partie de la course (a, b) un premier organe de réglage (2) reste pratiquement dans un état d'ouverture minimale pendant que le second organe de réglage (1) passe sensiblement d'un état d'ouverture minimale à un état d'ouverture maximale ou inversement et que sur une autre partie de la course (b, c) le premier organe de réglage passe sensiblement d'un état d'ouverture minimale à un état d'ouverture maximale ou inversement.

2. Dispositif selon la revendication 1, caractérisé en ce que pour l'un au moins des organes de réglage (1, 2) l'état d'ouverture minimale correspond sensiblement à un état de fermeture.

3. Dispositif selon l'une des revendications 1 et 2, caractérisé en ce que pour au moins un point de la course (a) les deux organes de réglage sont dans leur état d'ouverture minimale.

4. Dispositif selon la revendication 3, caractérisé en ce que les deux organes de réglage sont en état d'ouverture minimale pour un point intermédiaire (a) de la course.

5. Dispositif selon la revendication 3, caractérisé en ce que les deux organes de réglage sont en état d'ouverture minimale pour un point extrême (a) de la course.

6. Dispositif selon l'une des revendications précédentes, caractérisé en ce que les organes de réglage sont des volets (1, 2) pouvant pivoter de façon à obturer à un degré variable un passage de fluide.

7. Dispositif selon la revendication 6, caractérisé en ce qu'au cours de ladite course l'un au moins des volets (201) pivote dans un seul sens entre une position extrême d'ouverture minimale et une position extrême d'ouverture maximale.

8. Dispositif selon la revendication 6, caractérisé en ce qu'au cours de ladite course l'un au moins des volets (1) pivote dans un seul sens entre deux positions extrêmes correspondant à un même état d'ouverture minimale ou maximale, en passant par au moins une position intermédiaire correspondant à l'état opposé d'ouverture maximale ou minimale.

9. Dispositif selon la revendication 6, caractérisé en ce qu'au cours de ladite course l'un au moins des volets (202) pivote dans un premier sens d'une position extrême d'ouverture minimale à une position extrême d'ouverture maximale, puis en sens inverse de la position d'ouverture maximale à la position d'ouverture minimale.

10. Dispositif selon l'une des revendications 6 à 9, caractérisé en ce que le degré d'ouverture du volet (1) varie progressivement pendant la totalité de son mouvement.

11. Dispositif selon l'une des revendications 6 à 9, caractérisé en ce que le volet (401) reste pratiquement dans un état d'ouverture minimale pendant une portion de son mouvement.

12. Dispositif selon l'une des revendications précédentes, caractérisé en ce que les moyens de transmission comprennent une came motrice (3) pivotant en correspondance de ladite course pour entraîner l'un des organes de réglage par l'intermédiaire d'un élément pivotant (20).

13. Dispositif selon la revendication 12, caractérisé en ce que la came présente au moins une surface de travail sensiblement circonférentielle (31) coopérant avec l'élément pivotant pour maintenir celui-ci fixe pendant une partie (a, b) de ladite course, et au moins une surface de travail sensiblement radiale (32) coopérant avec l'élément pivotant pour faire pivoter celui-ci pendant une autre partie (bc) de ladite course.

14. Dispositif selon la revendication 13, caractérisé en ce que la came présente deux surfaces de travail sensiblement circonférentielles (31, 33) raccordées entre elles par une surface de travail sensiblement radiale (32), ces surfaces de travail coopérant avec l'élément pivotant pour maintenir celui-ci dans deux positions angulaires déterminées, correspondant respectivement aux états d'ouverture minimale et maximale de l'organe de réglage associé, sur deux portions extrêmes (a, b; c, d) de ladite course, et pour le faire passer d'une position à l'autre sur la portion restante (b, c) de la course.

15. Dispositif selon la revendication 13, caractérisé en ce que la came motrice (303) présente une surface de travail sensiblement circonférentielle (337) raccordant entre elles une surface de travail sensiblement radiale (336) et une surface de travail oblique (338), ces surfaces de travail coopérant avec l'élément pivotant (320) pour maintenir celui-ci dans une position d'ouverture maximale sur une portion intermédiaire (b, c) de ladite course et pour l'amener progressivement à une position d'ouverture minimale aux deux extrémités (a, d) de la course.

16. Dispositif selon la revendication 13, caractérisé en ce que l'élément pivotant est une seconde came (106) présentant une surface de travail sensiblement circonférentielle (163) et une surface de travail sensiblement radiale pour coopérer avec un second élément pivotant (120) qui entraîne un élément de réglage associé (102).

17. Dispositif selon la revendication 12, caractérisé en ce que la came motrice (503) présente deux surfaces de travail inclinées dans des directions opposées par rapport à son rayon, coopérant avec l'élément pivotant (520) pour entraîner celui-ci selon un mouvement d'aller et de retour au cours de ladite course.

18. Dispositif selon la revendication 12, caractérisé en ce que la came motrice présente une surface de travail inclinée et une surface de travail sensiblement circonférentielle coopérant avec l'élément pivotant.

19. Dispositif selon l'une des revendications 1 à 11, caractérisé en ce que les moyens de transmission comprennent un levier moteur (403) pivotant en correspondance de ladite course et reliée par une bielle (406) à une manivelle (420) entraînant l'un des organes de réglage (402) de façon qu'au cours de ladite course la manivelle effectue un mouvement d'aller et de retour entre deux positions angulaires correspondant respectivement aux états d'ouverture minimale et d'ouverture maximale de l'organe de réglage associé.

20. Dispositif selon l'une des revendications 12 à 19, caractérisé en ce que l'organe de réglage qui n'est pas entraîné par l'élément pivotant (20) ou par la manivelle (420) est entraîné d'un mouvement continu avec la came motrice (3) ou le levier moteur (403).

21. Dispositif selon l'une des revendications précédentes, caractérisé en ce que la même came (303) présente trois surfaces de travail telles que décrites dans la revendication 14 coopérant avec un premier élément pivotant (310) associé à l'un des organes de réglage et trois surfaces de travail (335, 336, 337) telles que décrites dans la revendication 15 coopérant avec un second élément pivotant (320) associé à l'autre organe de réglage.

22. Dispositif selon la revendication 14 et la revendication 19, caractérisé en ce que la came (203) entraînant un organe de réglage (201) constitue également le levier entranant l'autre organe de réglage (202).

23. Dispositif selon l'une des revendications 1 à 11, caractérisé en ce que les moyens de transmission comprennent un levier moteur (603) coopérant avec au moins une came pivotante (620), qui entraîne l'un des organes de réglage (602), par des surfaces de travail (626, 627, 628) de celle-ci dont l'une au moins (627, 628) s'étend circonférentiellement par rapport au levier lorsqu'elle est en prise avec celui-ci pour maintenir la came en position fixe sur une portion (a, b; c, d) de ladite course, et dont une autre au moins (626) s'étend radialement ou obliquement par rapport au levier lorsqu'elle est en prise avec celui-ci pour faire pivoter la came sur une autre portion (b, c) de ladite course.

24. Dispositif selon la revendication 23, caractérisé en ce que le levier moteur (703) coopère avec deux cames pivotantes (710,720) qui entraînent respectivement les deux organes de réglage (701,702), l'une des cames (720) présentant une surface de travail radiale raccordant deux surfaces de travail circonférentielles et l'autre came (710) présentant une surface de travail circonférentielle raccordant une surface de travail radiale et une surface de travail oblique.

25. Dispositif selon l'une des revendications précédentes, caractérisé en ce qu'il comprend un moteur pour entraîner les organes de réglage par l'intermédiaire de moyens de transmission, et un sélecteur marche/arrêt (B), le moteur amenant les deux organes de réglage à leur état d'ouverture minimale lorsque le sélecteur est en position d'arrêt et les amenant aux états définis par la position de l'organe de commande (C') lorsque le sélecteur est en position de marche.

26. Dispositif selon l'une des revendications précédentes, caractérisé en ce que lesdits courants de fluides sont respectivement un courant d'air froid et un courant d'air réchauffé par passage au contact d'un échangeur de chaleur (4), destinés à être envoyés vers une bouche d'aération et de chauffage de l'habitacle d'un véhicule automobile.

27. Installation d'aération et de chauffage de l'habitacle d'un véhicule automobile, caractérisée en ce qu'elle comprend un dispositif de commande selon la revendication 24 et des moyens pour interrompre une arrivée de chaleur à l'échangeur de chaleur lorsque l'organe de commande est dans une position d'arrêt (a) pour laquelle l'organe de réglage d'air froid est dans son état d'ouverture minimale.

28. Installation selon la revendication 27, caractérisée en ce que lesdits moyens d'interruption sont mis en oeuvre automatiquement lorsque l'organe de commande est dans la position d'arrêt.

29. Installation selon la revendication 27, caractérisée en ce que lesdits moyens d'intrruption sont manuels, et que l'organe de commande ne peut être écarté de sa position d'arrêt que si les moyens d'interruption sont hors service.

0267101

FIG.1

0267101

FIG. 2

0267101

FIG. 3

FIG. 4

0267101

## FIG. 5

## FIG. 6

0267101

FIG.7

FIG.8

FIG. 1A

FIG. 3A

FIG. 3B

FIG. 3C

FIG.5A    FIG.5B

FIG.7A    FIG.8A

0267101

# FIG. 9

# FIG. 10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 383 642 (SUMIKAWA et al.) <br> * En entier * <br> --- | 1-7,9, 13,26 | B 60 H 1/00 |
| X | FR-A-2 475 468 (SOCIETE ANONYME FRANCAISE DU FERODO) <br> * En entier * <br> --- | 1-3,5-7 ,9,10, 15,19, 26 | |
| X | FR-A-2 238 105 (SOCIETE ANONYME FRANCAISE DU FERODO) <br> * En entier * <br> --- | 1-3,5-7 ,9,22, 26 | |
| A | FR-A-2 491 839 (SÜDDEUTSCHE KÜHLERFABRIK JULIUS FR. BEHR) <br> * Figures 1-4 * <br> --- | 1,3,6-8 ,9,11, 19,26 | |
| A | FR-A-2 352 336 (REGIE NATIONALE DES USINES RENAULT) <br> * Figures 1-4 * <br> --- | 1,13,16 ,17,26 | |
| A | FR-A-2 494 195 (HEULIEZ D.E.A.) <br> * Figure 3 * <br> --- | 10,21, 26 | DOMAINES TECHNIQUES RECHERCHES (Int. Cl.4) |
| A | FR-A-2 459 511 (S.A. L. HEULIEZ) <br> * Revendications 1-10; figure 1 * <br> --- | 1,10,12 ,15,16, 18,20, 21,23, 26 | B 60 H |
| A | DE-U-1 853 104 (SÜDDEUTSCHE KÜHLERFABRIK JULIUS FR. BEHR) <br> * Revendication 7; figure 1 * <br> ----- | 1,27-29 | |

Le présent rapport a été établi pour toutes les revendications

| Lieu de la recherche | Date d'achèvement de la recherche | Examinateur |
|---|---|---|
| LA HAYE | 25-01-1988 | SINGER G.M. |

EPO FORM 1503 03.82 (P0402)